# EUROPEAN PATENT SPECIFICATION

(11) **EP 0 669 029 B1**
(45) Date of publication and mention of the grant of the patent: **21.04.1999**
(21) Application number: 93924882.9
(22) Date of filing: 08.11.1993
(51) Int. Cl.: G06F 17/60, G07G 1/14, A47F 10/02

(54) **RECEIVER POLLING**
ABFRAGE EINES EMPFAENGERS
INTERROGATION DE RECEPTEUR

(30) Priority: 13.11.1992 SE 9203411
(43) Date of publication of application: 30.08.1995
(73) Proprietor: Pricer AB, 754 51 Uppsala (SE)
(72) Inventor: AHLM, Roger, S-591 46 Motala (SE); NILSSON, Björn, S-752 63 Uppsala (SE); ÖDMARK, Ola, S-756 48 Uppsala (SE)
(74) Representative: Bjellman, Lennart Olov Henrik
(86) International application number: SE9300937
(87) International publication number: WO9411834

(56) References cited:
- EP-A- 0 396 414
- WO-A-90/13067

## Description

### Technical field

The present invention relates to information systems for displaying prices of articles on display units adjacent to the location of said articles at a point of sale. More particularly, the invention relates to systems of the type having a number of detached displaying units, which reproduce the information stored in the respective unit, which information is changeable by a wireless communication from a central computer or from a portable terminal.

### Prior art

One example of a known system of this type is disclosed in the Swedish patent application 8405140-8 filed October 15, 1984 and published January 23, 1988 as Swedish Patent SE 441 477 and being the basis of the devellopment leading to the present invention.

Another example of a similar system was published as European Patent Application EP-A-0 396 414, filed November 7, 1990 having priority from U.S. Application 348 355 filed May 5, 1989. The latter system discloses a receiver which is connected to one or more LCD displays attached to the shelves of the store and utilizes a battery for each receiver and each display which will allow a much higher power consumption level than if the units should be selfcontained by means of a photoelectric system.

In EP-A-0 396 414 is further disclosed a system having-receivers which are normally in an idling bus state and which will be activated for a 5 minute period of time by a transmitted 93.9 ms bus noise after which data will be transferred in form of data packets of 24 bits.

One problem in connection with information systems of the above mentioned kind, is to provide power supply for the different display units without recurring and tedious battery replacement procedures. According to system for which the present invention is intended, this problem is solved by normally supplying power to the display unit by means of a photoelectric converter producing current to operate the unit and to charge a capacitor or some other accumulator whenever the normal lighting is on, the display unit normally maintaining and displaying the latest information transmitted for a long period of time through supply only from the accumulator after that the lighting has been switched off or has become insufficient. This period of time is further extended since the display unit is arranged to switch automatically to a state of low consumption when supplied exclusively from the accumulator. Additional advantages will be achieved also when current supply is realized from the photoelectric converters, in that the display unit is arranged to at times disconnect current consuming portions without essentially changing the operation, which means that the photoelectric converters and the accumulators may be given smaller values and dimensions, which also affects the size of the entire display unit.

Another problem, which is solved by the present invention, relates to effecting an appropriate and efficient communication between the computer, from which information is transmitted, and the display modules. It is required that new information can be transmitted to any display unit at practically any time, the display units being required to be as energy-saving, small and reliable as possible. According to the present invention, this is achieved by the receiver of the display unit being energized for a predetermined period of time only and then completely switched off, provided that no transmitted signal is received during this period of time. After this it is kept switched-off for a period of time, which is substantially longer than the active period, whereas the transmitter, in order to activate all the receivers of the display units, initially transmits starting signals during a period of time before reprogramming signals for a display unit are transmitted.

Particularly advantageous embodiments of an information system having separate display units will be obtained if two or more of the solutions stated above are implemented within the same system. Although not interdependent, in combination they will provide such advantages, that a system highly adapted to its purpose and a most advantageous realization of the display units will be achieved. An objective of the invention is thus to combine solutions stated above to obtain a versatile selfcontained display unit for use as a price marking device directly on a shelf in a store.

### Description of the drawings

The invention will now be explained more in detail with reference to the drawings, wherein
- Figure 1: schematically shows an applicable system for the present invention,
- Figure 2: schematically shows the way a display unit can be constructed for reprogramming the identification code according to the invention,
- Figure 3: schematically shows the way the power consuption may be controlled in a display unit in a price system for a store whereby a portion of the load can be disconnected, and
- Figure 4: schematically shows, in the form of a diagram, the way the communication between the main unit and an embodiment of the display may be arranged to save power consumption by according to the invention controlling the activity period of the receive unit.

### Description of an exemplifying embodiment

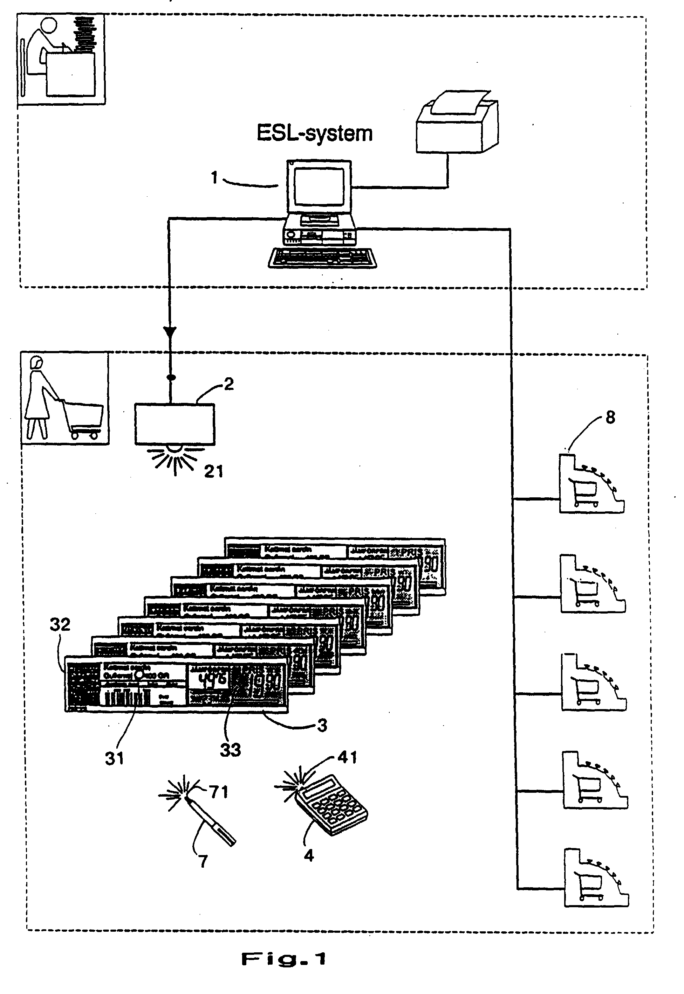

The system to which the present invention is applied, substantially based on the system of the Swedish patent document mentioned in the introduction, comprises, as shown in figure 1, a control unit 1, which can be a store computer to which the cash-register terminals 8 and, possibly, other terminals are connected in a well-known manner to store and register prices together with article identification. The control unit 1 is connected to a transmitter unit 2, which, according to a predetermined sequence, by means of a transmitter 21 transmits an signal. The transmitter 21 may preferably consist of diodes emitting infrared light, but may optionally consist of any other suitable wireless information transmitter. A display unit 3 comprises, when seen from the outside, a receiver 31 of the wireless information, a photoelectric converter unit 32 for power supply and a display 33, which units are connected to other built-in components to store information received by the receiver 31 and to display stored information on the display 33. The display unit 3 is arranged in a well-known manner to exclusively store received information of the type, that possesses an address portion corresponding to the relevant display unit and that satisfies, in other aspects, the display unit built-in check functions in the form of check sums etc. Only a few display units 3 are shown in figure 1, but normally, however, a large number of display units are arranged, each of those having its own address code, which is individually programmed prior to use. In a large store, the number may reach several thousands, which are controllable from a single control unit 1 having one or more transmitters 21. A hand terminal 4 having a transmitter 41 or a light pen 7 normally used when only one display unit is to be rearranged can be used optionally to change parameters in a display unit, e.g. to initiate the identification code of the display unit.

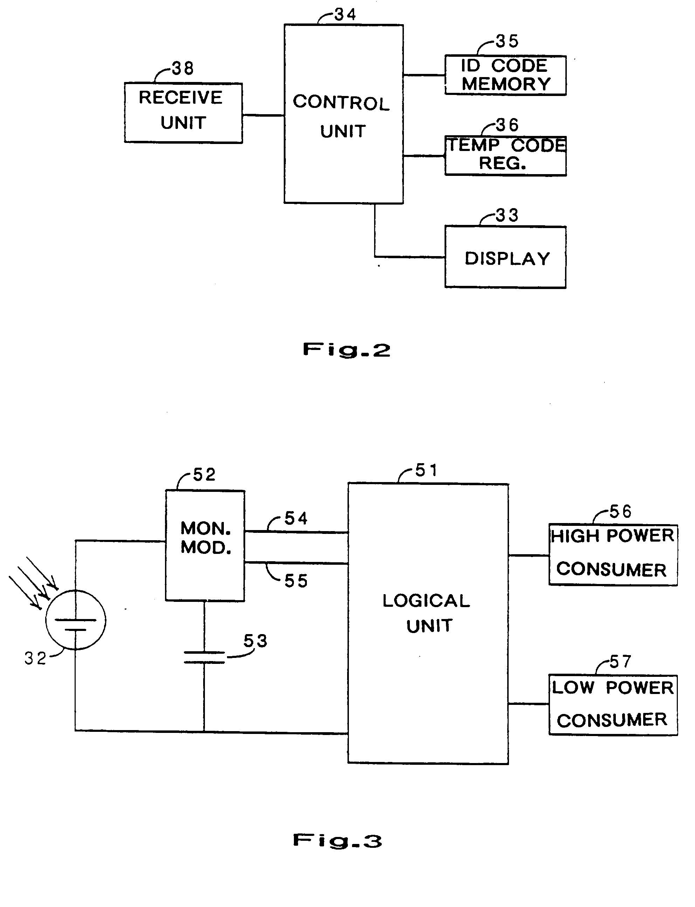

Additionally according to Fig. 2 the display unit is functionally designed, so that an identification code may initially be stored in a memory or register. The identification code is utilized, so that the identification code of a received signal from a receiving unit 38, containing the receiver 31, temporarily is stored by a control unit 34 in a code register 36, and will be compared with a pre-stored one, and, should a correspondence exist, received data will be stored instead of the previously stored data, this being realized by means of conventional technique. Before any identification code has been stored in a display unit, it is not possible to access it from the control unit. A hand terminal 4 may therefore be utilized to initiate a display unit and to store its identification code.

The reprogramming of the identification code is preferably achieved by reading of the code on the article, to which the display unit is to relate, by means of the hand terminal 4 or a light pen 7, the hand terminal being set to transmit a signal to the display unit when its control unit has been initiated for receiving. The signal to the display unit constituting the identification code is preferably composed by the article code and further code elements, which are unique to the system and the installation in question.

At this time, the display unit has only been sketched schematically. It is however obvious that a person skilled in the art will be able to realize this in different ways by utilizing generally well-known components or components specially designed for this purpose.

Figure 3 indicates schematically a switching of the power supply. A photoelectric converter 32 normally drives the components of the display unit, which as a whole have been designated as a logical unit 51 and consumers connected thereto in the form of high power consumers 56 comprising for instance the receive unit 38 and possibly a transmitter of acknowledgement signals, and low power consumers 57, mainly comprising a LCD display 33 and memory devices 35, 36. A monitoring module 52 is connected between the photoelectric converter 32 and an energy storage unit 53, the monitoring unit 52 being arranged to produce a high level signal to the logical unit 51 at the connection 54 when the output voltage of the converter 32 exceeds the output voltage of the energy storage unit 53, and a low level signal at the connection 55 when it is below a voltage threshold. The logical unit 51 is preferably arranged to include a delay, after which the high power consumers 56 will be disconnected once the logical unit has received a low level signal indicating to low power currently received from the photoelectric converter or solar cell 32. Also, the display unit is preferably designed in a manner to dispose a particular element, which becomes visible when a low level signal is received on the connection 55, i.e. when the logical unit 51 will disconnect high power consumers 56. By means of this element, for instance, a simple possibility to monitor the state of the display module will be obtained.

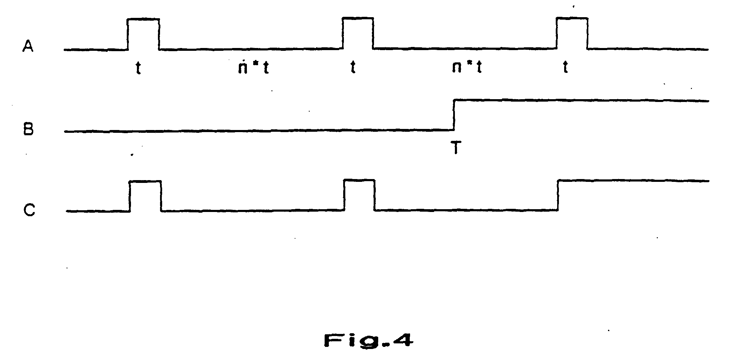

The receive unit 38 of a display unit 3 may thus be switched on and off to save energy taken from the photoelectric converter. This is briefly illustrated in figure 4 demonstrating a time operation of the receive unit 38 of a display unit 3 according to the principle used in the present invention. Fig. 4 A illustrates that the receive unit 3 is normally energized for a period of time t and then switched off, should no signal of the correct type have been received, to then be kept fully switched off for the period of time of n times t. As shown in figure 5 B, the control unit 1 starts transmitting at time T. The display unit is thereby arranged to keep the receiving function energized according to what is indicated in figure 5C, i.e. the receive unit 38 remains energized after the normal switching-on period of time t, which occurs after the start of the transmitter. In order to ensure that all receivers are definitively on and ready to receive information changes from the central ESL-system 1, the transmitter 2 will first, at least for the period of time of n times t, have to transmit information to alert the receiver to stay activated before transmitting the information which is required to reach its destination reliably. This action is referred to as polling. the individual display unit receiver. In order to prevent the receivers from trigging on various, possibly present disturbance signals, these are arranged, so that a predetermined signal form determining the system approved signal exclusively affects the receivers. The number n has to be greater than 1, preferably at least 8, to achieve a substantial energy saving. In conjunction with the circuitry described in connection with figure 3, additional energy-saving is achieved in that respect that if the monitoring module 52 is set to generate the low level signal at the connection 55 when it is below a voltage threshold, which means that the display unit will be supplied only by the energy storage element 53 and consequently the receive unit will be prevented to be switched on. This only leads to the fact that a reprogramming of a display unit will be prevented if the lighting level in the store is at too low level.

Hence the display units are also preferably provided with a transmitter for providing a wireless reply signal to the control unit 1, to acknowledge when information has been received and for example a price of a product has been changed. In the preferred embodiments of the display units 3 all communication to and from the units is realized by means of IR-light.

The invention has now been described functionally in detail with reference to drawings relating to embodiments. The more detailed realization can be achieved by a technique, which is well-known to a person skilled in the electronic art. The possibility of an arbitrary combination of the different embodiments in order to produce an efficient and appropriate system is also intended to lie within the scope of the invention.

## Claims

1. A system combination for transmission of information from a control unit having a transmitter (2) to at least one display unit (3) out of a large number of separate display units arranged to present transferred information, each such unit being primarily powered by a photoelectric converter (32) or a solar cell and comprising its own receive unit (38), **characterized in**
that the display unit is containing a monitor module (52) for monitoring the power supply level of said photoelectric converter,
that the receive unit (38) will normally be in a fully switched-off state to save power from the photoelectric converter (32), but regularly being switched on after a time period of n times t, where n is a selected positive number and t is a selected time period, whereby when the receive unit is polled, i.e. energized, and if no for the system approved signals are received, it will again be fully switched-off after the selected time unit t, while the time of reception will be prolonged if approved signals are received, and
that the transmitter (2), at least at the beginning of a transmission will be given information which not selectively is intended to produce a change of stored information in any of the display units.

2. The system combination according to claim 1, **characterized in**
that n is larger than 1, preferably at least 8.

3. The system combination according to claim 1 or 2, **characterized in**
that all transmitted information to be received by the display unit has a predetermined form which is defining an approved control signal for the particular system.

4. The system combination according to any of the previous claims, **characterized in**
that the receive unit (38) contained in the display unit (3) will be completely shut off by the action of the monitoring module (52) due to low power supply.

5. The system combination according to any of the previous claims, **characterized in**
that a display unit which has received information from the transmitter of the control unit is arranged to emit a response signal to acknowledge the control unit.

## Patentansprüche

1. Systemaufbau zum Ubertragen von Informationen von einer Steuereinheit mit einem Sender (2) auf mindestens eine Anzeigeeinheit (3) aus einer großen Anzahl von separaten Anzeigeeinheiten, die vorgesehen sind, die übertragenen Informationen darzustellen, wobei jede solche Einheit in erster Linie durch einen photoelektrischen Wandler (32) oder eine Solarzelle mit Energie versorgt wird und ihre eigenen Empfangseinheit (38) aufweist, **dadurch gekennzeichnet,**
daß die Anzeigeeinheit ein Überwachungsmodul (52) zum Überwachen des Energieversorgungsniveaus des photoelektrischen Wandlers umfaßt,
daß die Empfangseinheit (38) sich normalerweise in einem ganz ausgeschalteten Status befindet, um Energie von dem photoelektrischen Wandler (32) zu sparen, aber regelmäßig nach einem Zeitraum von n mal t angeschaltet wird, wobei n eine ausgewählte positive Zahl und t ein ausgewählter Zeitraum ist, wobei, wenn die Empfangseinheit abgefragt wird, d.h. mit Energie versorgt wird, und falls keine für das System zutreffenden Signale empfangen werden, sie nach der ausgewählten Zeiteinheit t erneut ganz ausgeschaltet wird, während die Empfangszeit verlängert wird, falls zutreffende Signale empfangen werden, und
daß dem Sender (2), zumindest am Anfang der Übertragung, Informationen gegeben werden, die nicht speziell vorgesehen ist, eine Änderung der gespeicherten Information in einer der Anzeigeeinheiten hervorzurufen.

2. Systemaufbau nach Anspruch 1, **dadurch gekennzeichnet,**
daß n größer ist als 1, vorzugsweise mindestens 8.

3. Systemaufbau nach Anspruch 1 oder 2, **dadurch gekennzeichnet,**
daß alle übertragenen Informationen, die von der Anzeigeeinheit zu empfangen sind, einen vorgegebene Form aufweisen, die ein zutreffendes Steuersignal für das jeweilige System definiert.

4. Systemaufbau nach einem der vorangehenden Ansprüche, **dadurch gekennzeichnet,**
daß die Empfangseinheit (38), die von der Anzeigeeinheit (3) umfaßt wird, durch die Handlung des Überwachungsmoduls aufgrund einer niedrigen Energieversorgung vollständig abgestellt wird.

5. Systemaufbau nach einem der vorangehenden Ansprüche, **dadurch gekennzeichnet,**
daß eine Anzeigeeinheit, die Informationen von dem Sender der Steuereinheit empfangen hat, vorgesehen ist, zur Bestätigung an die Steuereinheit ein Antwortsignal zu emittieren.

## Revendications

1. Système combiné pour la transmission d'informations d'une unité de commande ayant un émetteur (2) à au moins une unité d'affichage (3) parmi un grand nombre d'unités d'affichage séparées prévues pour présenter les informations transmises, chacune de ces unités étant principalement alimentée en énergie par un convertisseur photoélectrique (32) ou une pile solaire et comportant sa propre unité de réception (38), caractérisé en ce que :
l'unité d'affichage contient un module de contrôle (52) pour surveiller le niveau d'alimentation en énergie dudit convertisseur photoélectrique ;
l'unité de réception (38) est normalement dans un état complètement hors circuit pour économiser l'énergie fournie par le convertisseur photoélectrique (32), mais elle est régulièrement mise en circuit après une durée de n x t, où n est un nombre positif choisi et t est une période de temps choisie de sorte que, lorsque l'unité de réception est interrogée, c'est-à-dire excitée, et si aucun signal approuvé pour le système n'est reçu, l'unité de réception est à nouveau complètement mise hors circuit après l'unité de temps choisie t, tandis que la durée de réception est prolongée si des signaux approuvés sont reçus ; et
l'émetteur (2), au moins au début d'une transmission, reçoit des informations qui sont destinées non sélectivement à produire un changement des informations stockées dans une quelconque des unités d'affichage.

2. Système combiné selon la revendication 1, caractérisé en ce que n est plus grand que 1 et de préférence au moins égal à 8.

3. système combiné selon la revendication 1 ou 2, caractérisé en ce que :
toutes les informations transmises pour réception par l'unité d'affichage ont une forme prédéterminée qui définit un signal de commande approuvé pour le système particulier.

4. Système combiné selon une quelconque des revendications précédentes, caractérisé en ce que :
l'unité de réception (38) contenue dans l'unité d'affichage (3) est complètement hors circuit par l'action du module de contrôle (52) dans le cas d'une alimentation faible.

5. Système combiné selon une quelconque des revendications précédentes, caractérisé en ce que :
une unité d'affichage qui a reçu des informations en provenance de l'émetteur de l'unité de commande est agencée de manière à émettre un signal de réponse pour accuser réception à l'unité de commande.
